# EUROPEAN PATENT APPLICATION

(11) **EP 4 538 763 A1**
(43) Date of publication of application: **16.04.2025**
(21) Application number: 23203011.4
(22) Date of filing: 11.10.2023
(51) Int. Cl.: G02B 7/00, G02B 21/24, G02B 21/26

(54) **MICROSCOPE STAND**

(71) Applicant: Leica Instruments (Singapore) Pte Ltd, Singapore 608924 (SG)
(72) Inventor: Marte, Christian, 608924 Singapore (SG); Schnitzler, Harald, 608924 Singapore (SG)
(74) Representative: Schaumburg und Partner Patentanwälte mbB

(57) **Abstract**

A microscope stand (102) comprises a base (110) having an observation position (114) configured to receive an object (108) and a microscope column (116) extending in a vertical direction (V) from the base (110). An imaging unit carrier (118) is moveably mounted to the microscope column (116) and configured to mount an imaging unit (104) to the microscope stand (102). The imaging unit (104) is configured to generate a microscopic image of the object (108) received in the observation position (114). The microscope stand (102) comprises a weight compensation unit (200) configured to counteract the weight of the imaging unit carrier (118) and of the imaging unit (104), when the imaging unit (104) is mounted to the imaging unit carrier (118). The weight compensation unit (200) comprises a counterforce generating element (202) fixed to a mounting point (206), and a pulley system (210) connecting the counterforce generating element (202) with the imaging unit carrier (118) such that a force generated by the counterforce generating element (202) is applied to the imaging unit carrier (118) in the opposite direction of the weight of the imaging unit carrier (118) and of the imaging unit (104), when the imaging unit (104) is mounted to the imaging unit carrier (118).

## Description

### Technical field

The invention relates to a microscope stand comprising a base and a microscope column extending in a vertical direction from the base.

### Background

In the art, microscopes are known that comprise a microscope column extending in a vertical direction, and an imaging unit moveably mounted on the microscope column. The microscopes typically comprise drives for vertically moving the imaging unit. Since the optical axis is also known as the z-axis, these drives are also called z-drives. These z-drives make it possible to position the imaging unit relative to the sample in order to align the focal position with the desired sample position. Known z-drives include both manual z-drives and motorized z-drives. In manual z-drives, the movement of a control element, often called focus knob, is directly translated into a movement of the sample or the imaging unit. In motorized z-drives, the movement of the control element controls a motor that moves the sample or the imaging unit. Motorized drives allow for an autofocus and make it possible to automate image acquisition, in particular the acquisition of z-stacks and extended depth of field images, thereby supporting digital image acquisition to a significant extent. However, typical imaging units can weigh up to 18 kg or more, which means that the z-drive must be able to handle a large load. This has a negative effect on the precision with which the imaging unit may be positioned along the z-axis.

### Summary

It is an object to provide a microscope stand that makes it possible to adjust the focal position with high precision.

The aforementioned object is achieved by the subject-matter of the independent claim. Advantageous embodiments are defined in the dependent claims and the following description.

The proposed microscope stand comprises a base having an observation position configured to receive an object and a microscope column extending in a vertical direction from the base. An imaging unit carrier is moveably mounted to the microscope column and configured to mount an imaging unit to the microscope stand. The imaging unit is configured to generate a microscopic image of the object received in the observation position. The microscope stand comprises a weight compensation unit configured to counteract the weight of the imaging unit carrier and of the imaging unit, when the imaging unit is mounted to the imaging unit carrier. The weight compensation unit comprises a counterforce generating element fixed to a mounting point, and a pulley system connecting the counterforce generating element with the imaging unit carrier such that a force generated by the counterforce generating element is applied to the imaging unit carrier in the opposite direction of the weight of the imaging unit carrier and of the imaging unit, when the imaging unit is mounted to the imaging unit carrier.

The base may, for example, comprise a transmitted light stage. However, the base may also comprise any other arrangement that allows for the sample to be placed in the observation position. The microscope column extends vertically from the base and mounts the imaging unit carrier which may be moved along the vertical direction. The imaging unit carrier mounts the imaging unit not being part of the microscope stand. The microscope stand and the imaging unit together form at least part of a microscope system. The imaging unit may be removeable from the imaging unit carrier and comprises optical components for generating the microscopic image. The imaging unit may further comprise an imaging sensor for capturing the microscopic image and/or an eyepiece that allows a user to observe the microscopic image. The counterforce generating element may be a spring or a counterweight. Other examples for the counterforce generating element are described below with reference to preferred embodiments. The force generated by the counterforce generating element may be adjustable by the user.

The weight compensation unit allows the imaging unit carrier and the imaging unit to be moved with very little force. The only force needed to move the imaging unit carrier and the imaging unit is the force needed to overcome friction. This makes it possible to use very precise drives to move the imaging unit which where otherwise not capable of moving heavy loads. The use of a very precise drive in turn allows adjusting the focal position with high precision. The pulley system provides a mechanical advantage to the weight compensation. The mechanical advantage may shorten the travel of the counterforce generating element. This allows the microscope stand to be made very compact. For example, a spring may be used as the counterforce generating element that provides a force twice the combined weight of the imaging unit carrier and the imaging unit. The mechanical advantage may also reduce the force required to move the combined weight of the imaging unit carrier and the imaging unit while increasing the travel or stroke of the counterforce generating element. This allows the microscope stand to be made very lightweight. For example, a counterweight may be used as the counterforce generating element that weighs only half the combined weight of the imaging unit carrier and the imaging unit.

In an embodiment, the counterforce generating element is a gas pressure spring. Gas pressure springs provide an almost constant force and can be finetuned to the combined weight of the imaging unit carrier and the imaging unit by filling the gas pressure spring or releasing gas from the gas pressure spring. In addition, gas springs are comparatively low-maintenance. This makes gas pressure springs ideally suited as the counterforce generating element.

In another embodiment, the pulley system comprises a moveable pulley connected to the counterforce generating element and configured to be moveable along the vertical direction. The moveable pulley is attached to the counterforce generating element such that the force generated by the counterforce generating element is applied to the moveable pulley. Thus, the movement of the moveable pulley allows the counterforce generating element to remain fixed with respect to the microscope column and compensates for the travel or stroke of the counterforce generating element when the imaging unit carrier is moved. Thereby, a particularly simple pulley system is realized.

Preferably, a rope of the pulley system is guided through the moveable pulley, a first end of the rope is fixed to the microscope column, and a second end of the rope is fixed to the imaging unit carrier. Alternatively, the first end may be fixed to the counterforce generating element such that the force generated by the counterforce generating element is applied to tension the rope.

In another embodiment, the rope of the pulley system is a band, a metal band, or a steel band. The band does not slip of pulleys of the pulley system, for example an idle pulley. Metal and steel in particular have a high tensile strength, making it possible to apply great forces to the rope. This allows heavy imaging units to be used with the microscope stand.

In another embodiment, the microscope column comprises the counterforce generating element. In this embodiment, the microscope column forms a housing for the counterforce generating element, and preferably for the pulley system too. Thereby, all moving parts are hidden from the user of the microscope stand. This makes the microscope stand safer to use, especially when used with a heavy imaging unit where great forces work on the pulley system.

In another embodiment, the weight compensation unit comprises at least one or more idle pulleys arranged at the top of the microscope column for guiding the rope of the pulley system over the top of the microscope column. This reduces friction between the rope and the microscope column, thereby making the pulley system more efficient. This also increases the achievable precision.

In another embodiment, the microscope stand comprises a drive unit configured to move the imaging unit carrier. The drive may be motorized to allow an automated movement of the imaging unit carrier, and thus the imaging unit. This may be used in an autofocus or for the acquisition of z-stacks or extended depth of field images.

In another embodiment, the drive unit comprises a coarse drive configured to coarsely adjust the vertical position of the imaging unit carrier along the vertical direction, and a fine drive mechanically coupled to the coarse drive and arranged in series with the coarse drive, the fine drive being configured to finely adjust the vertical position of the imaging unit carrier along the vertical direction. The fine drive is configured to move the imaging unit carrier with a small step size. Thereby, the fine drive allows the imaging unit carrier to be moved with high precision, for example in an autofocus or during the acquisition of a z-stack. Conversely, the coarse drive is configured to move the imaging unit carrier with a larger step size than the fine drive. Thus, the coarse drive allows the imaging unit carrier to be moved fast along a large distance. The coarse drive and/or the fine drive may be motorized. The coarse drive and the fine drive are mechanically coupled and arranged in series, meaning that either the coarse drive is movable by the fine drive, or the fine drive is movable by the coarse drive. Thus, the coarse drive and the fine drive together form at least part of the drive unit of the microscope stand that allows the position of the imaging unit carrier, and thus the imaging unit. This drive unit together with the weight compensation unit makes it possible to adjust the focal position with high precision, while also providing long travel and fast travel speeds.

Preferably, the coarse drive is a spindle drive, a rack and pinion drive, or a belt drive. The aforementioned drives are especially well suited for moving heavy loads such as the imaging unit fast and over long distances. They are therefore well suited as the coarse drive. The coarse drive may comprise a stepper motor, a DC motor, a brush less DC motor or a linear motor. These motors are well suited for moving a heavy load fast. They are therefore well suited for driving the coarse drive. The fine drive may comprise a piezo motor or a stepper motor. The aforementioned motors are especially well suited for moving even heavy loads with a short step size. They are therefore well suited to precisely position the imaging unit using the fine drive.

In an embodiment, the coarse drive is arranged and configured to be moveable by the fine drive, and the fine drive is configured to move the coarse drive and the imaging unit carrier in order to finely adjust the vertical position of the imaging unit carrier along the vertical direction. In this embodiment, the imaging unit carrier is attached to the coarse drive. The imaging unit carrier is directly moved by the coarse drive in order to approximately position the imaging unit mounted by the imaging unit carrier. The coarse drive itself is attached to the fine drive such that the fine drive can move both the coarse drive and the imaging unit carrier in order to precisely position the imaging unit.

In an alternative embodiment, the fine drive is arranged and configured to be moveable by the coarse drive, and the coarse drive is configured to move the fine drive and the imaging unit carrier in order to coarsely adjust the vertical position of the imaging unit carrier along the vertical direction. Conversely to the previously described embodiment, in this embodiment, the imaging unit carrier is attached to the fine drive. The imaging unit carrier is directly moved by the fine drive in order to precisely position the imaging unit mounted by the imaging unit carrier. The fine drive itself is mounted by the coarse drive such that the coarse drive can move both the fine drive and the imaging unit carrier in order to approximately position the imaging unit.

In another embodiment, the microscope stand comprises a controller configured to control the coarse drive and the fine drive based on a user input corresponding to a set point value of the vertical position of the imaging unit carrier along the vertical direction. In particular, the controller is configured to control the coarse drive and the fine drive based on a single user input. Based on the user input, the controller determines how to move the imaging unit carrier in order to position the imaging unit at the specified vertical position. For example, the controller may control the coarse drive first in order to quickly bring the imaging unit carrier to approximately the specified vertical position, and then control the fine drive in order to precisely position the imaging unit carrier at the specified vertical position. Contrary to the state of the art where fine adjustments and coarse adjustments require different user inputs, this embodiment allows the user to specify the vertical position of the imaging unit carrier in a single input. This makes the microscope stand very user friendly.

In another embodiment, the microscope stand comprises a linear encoder configured to generate a sensor signal corresponding to the vertical position of the imaging unit carrier along the vertical direction, and to transmit the sensor signal to the controller. Alternatively, the vertical position of the imaging unit carrier may be determined by alternative means, for example laser distance measuring. The sensor signal allows the controller to accurately determine the actual vertical position of the imaging unit carrier, thereby allowing an even more precise control of the vertical position. The controller may in particular be a closed-loop controller configured to control the coarse drive and the fine drive based on the sensor signal. While controlling the coarse drive and the fine drive to move the imaging unit carrier, the closed-loop controller compares the set point value with the actual vertical position of the imaging unit carrier and corrects for discrepancies, for example due to slack. This allows for a much more precise control over a long period of use, since slack due to wear is automatically compensated for.

In another embodiment, the travel of the fine drive is smaller than the travel of the coarse drive. Since the fine drive is used for precise positioning and the coarse drive is used for long travel distances, the travel of the fine drive may be much smaller than the travel of the coarse drive. This allows the fine drive and the coarse drive to be used more efficiently.

In another embodiment, a step size of the fine drive is smaller than a step size of the coarse drive. The step size is the minimum movement along the vertical direction that can be realized by the respective drive. Since the fine drive is used for precise positioning and the coarse drive is used for long travel distances, the step size of the coarse drive may be larger than the step size of the fine drive, thereby allowing the fine drive and the coarse drive to be used more efficiently.

In another embodiment, the counterforce generating element is configured to generate a force of at least 50 N and at most 360 N. Due to the mechanical advantage achieved by the pully system, the force generated by the counterforce generating element needs to be a multiple of the weight of the imaging unit carrier and the imaging unit. The above range covers the most commonly used imaging units.

In another embodiment, the imaging unit carrier has a travel of at least 5 mm and/or at most 2000 mm. This range of motion is optimal for approximately positioning the imaging unit in many microscopic applications.

In another embodiment, the base comprises a microscope stage configured to be moveable along at least one direction perpendicular to the vertical direction. A top surface of the microscope stage comprises the observation position. The moveable microscope stage allows the sample received in the observation position to be moved within the field of view of the imaging unit. Preferably, the microscope stage is configured to be moveable along two directions perpendicular to the vertical direction. In such an embodiment, the microscope stage is an X-Y-table.

### Short Description of the Figures

Hereinafter, specific embodiments are described referring to the drawings, wherein:
- Figure 1: is a schematic view of a microscope system having a microscope stand according to an embodiment;
- Figure 2: is a schematic view of the microscope stand according to Figure 1;
- Figure 3: is a schematic cut view of a microscope stand according to Figure 1 and 2; and
- Figure 4: is a block diagram of the microscope system according to Figure 1.

### Detailed Description

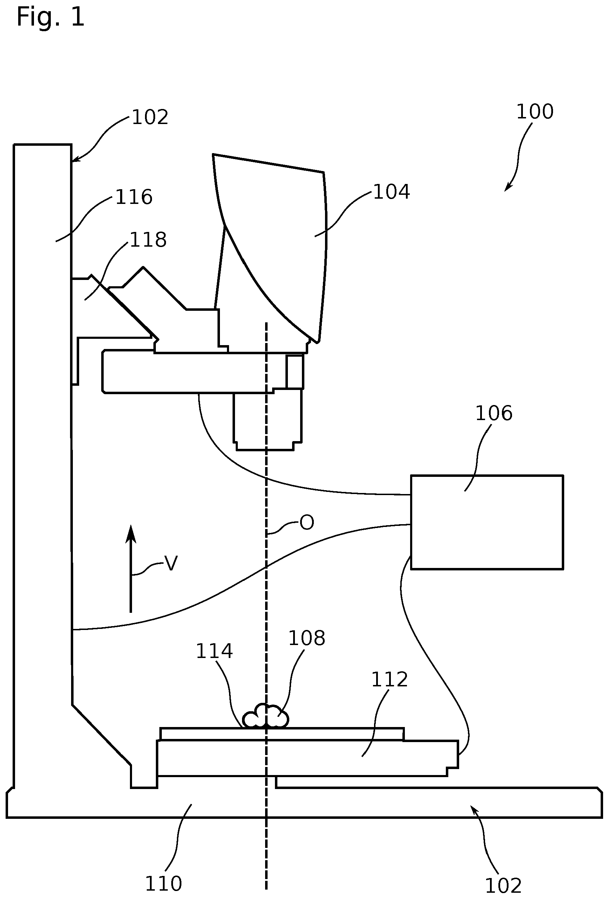

Figure 1 is a schematic view of a microscope system 100 having a microscope stand 102 according to an embodiment.

The microscope system 100 comprises the microscope stand 102, an imaging unit 104 mounted on the microscope stand 102, and a controller 106. The imaging unit 104 is configured to generate a microscopic image of an object 108 and may comprise optical elements, such as an objective and a tube lens, for generating the microscopic image of the object 108. In Figure 1, the imaging unit 104 is exemplary formed as a digital microscope comprising an image sensor for capturing the microscopic image. However, the imaging unit 104 may also comprise at least one eyepiece to allow a user to directly observe the microscopic image generated by the optical elements of the imaging unit 104. The imaging unit 104 may also be removable in order to allow the user to swap the imaging unit 104 for a different imaging unit.

The microscope stand 102 comprises a base 110 located at the bottom of the microscope stand 102. The base 110 exemplary comprises a microscope stage 112. An observation position 114 for receiving the object 108 is arranged on a top surface of the microscope stage 112. The microscope stage 112 is further configured to be moveable in two directions perpendicular to an optical axis O of the imaging unit 104. Since the optical axis O is also called the z-axis, the two perpendicular directions are called x-axis and y-axis, respectively. Accordingly, the microscope stage 112 according to the embodiment shown in Figure 1 is also known as an x-y-table. The moveable microscope stage 112 allows the object 108 received in the observation position 114 to be moved in the field of view of the imaging unit 104.

The microscope stand 102 further comprises a microscope column 116 that extends in a vertical direction V from the base 110. In the embodiment shown in Figure 1, the vertical direction V is parallel to the optical axis O of the imaging unit 104. The microscope column 116 comprises an imaging unit carrier 118 that is configured to mount the imaging unit 104. The imaging unit carrier 118 is moveable along the vertical direction V. This makes it possible to position the imaging unit 104 mounted on the imaging unit carrier 118 along the vertical direction V, and thus along its optical axis O relative to the object 108. By moving the imaging unit 104 along the vertical direction V, the focal position of the imaging unit 104 is also moved. Thus, moving the imaging unit carrier 118 also moves the focal position of the imaging unit 104.

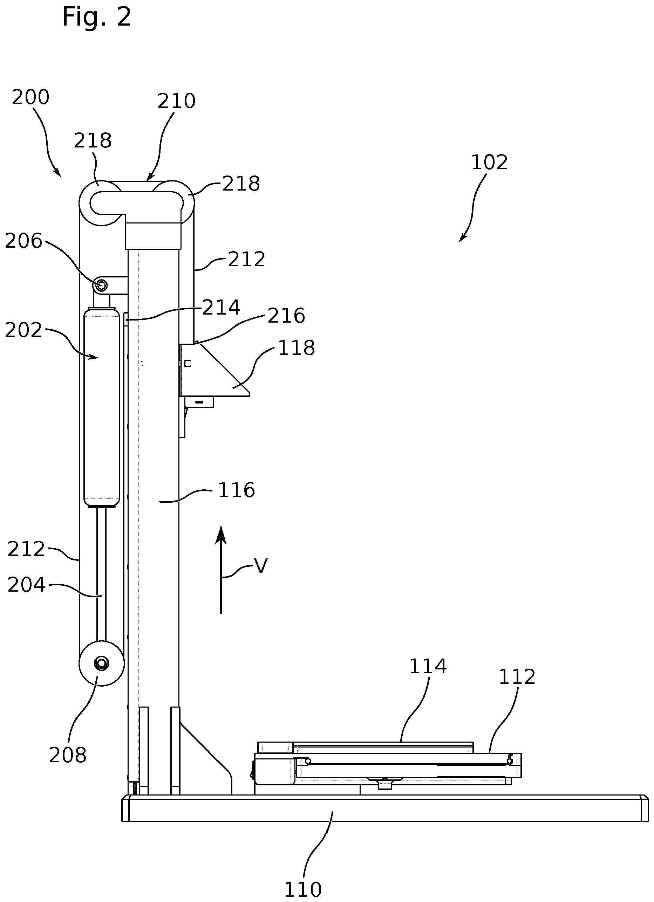

The microscope stand 102 comprises a weight compensation unit 200 which is described in the following with reference to Figure 2. The weight compensation unit 200 compensates the weight of the imaging unit carrier 118 allowing the imaging unit carrier 118 to be moved with little to no force. This allows for a very precise positioning of the imaging unit 104, and thereby the focal position of the imaging unit 104.

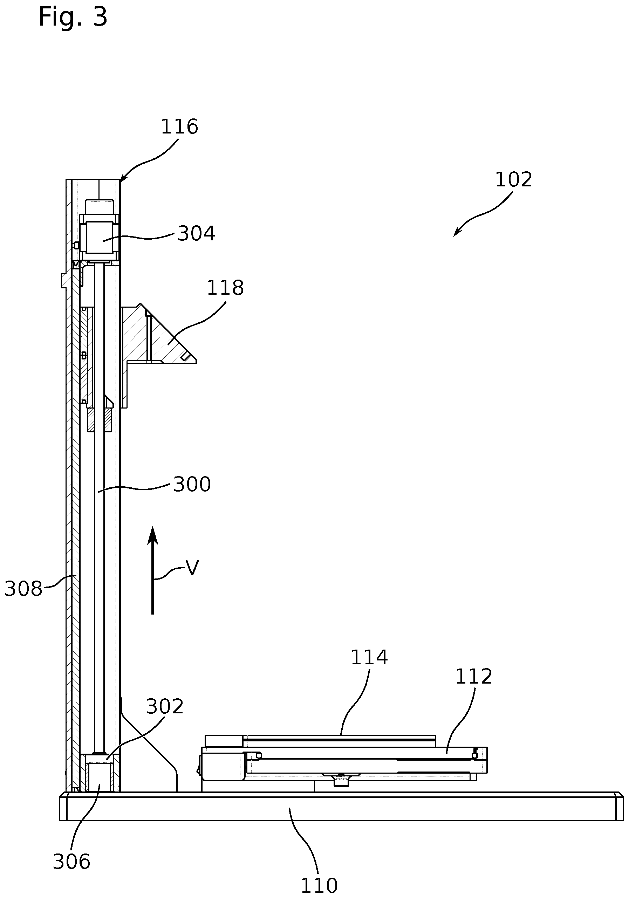

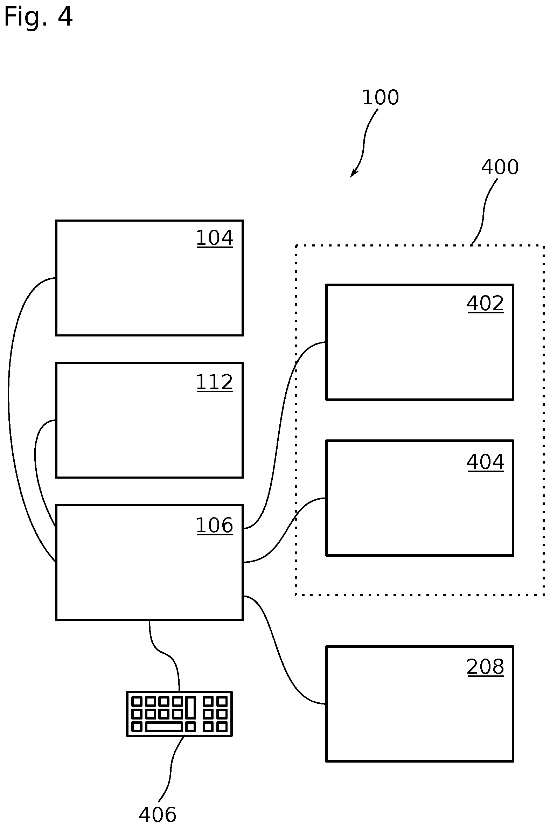

In the described embodiment, the movement of the imaging unit carrier 118 is facilitated by two drives 402, 404 forming a drive unit 400 (see Figure 4) which are described in the following with reference to Figure 3. The drive unit 400 is controlled by the controller 106 of the microscope system 100 which is described in more detail in the following with reference to Figure 4. The controller 106 is further exemplary configured to control the imaging unit 104 and the microscope stage 112, and may be a part of the microscope stand 102.

Figure 2 is a schematic of the microscope stand 102 according to Figure 1.

In Figure 2, a housing of the microscope stand 102 is removed in order to reveal the weight compensation unit 200. The weight compensation unit 200 comprises a counterforce generating element 202 exemplary formed as a gas pressure spring. The counterforce generating element 202 generates a force that is directed by the weight compensation unit 200 in order to compensate for the weight of the imaging unit carrier 118 and the imaging unit 104, when the imaging unit 104 is mounted to the microscope column 102. In the present embodiment, the force is applied to an extending piston 204 of the counterforce generating element 202. The counterforce generating element 202 is fixed to a mounting point 206 of the microscope column 116 such that the counterforce generating element 202 does not move relative to the microscope stand 102. The extending piston 204 of the counterforce generating element 202 is attached to a moveable pulley 208 of a pulley system 210 of the weight compensation unit 200. Thereby, the force generated by the counterforce generating element 202 moves the moveable pulley 208.

The pulley system 210 further comprises a rope 212, a first end 214 of which is attached to the microscope column 116 near the mounting point 206 of the counterforce generating element 202. A second end 216 of the rope 212 is attached to the imaging unit carrier 118. The rope 212 is guided through the moveable pulley 208, and two idle pulleys 218 arranged atop the microscope column 116. Thereby, the rope 212 is arranged such that it is kept under tension by the force generated by the counterforce generating element 202 and the weight of the imaging unit carrier 118 as well as the imaging unit 104, when the imaging unit 104 is mounted to the microscope column 102. Due to the tension of the rope 212, the extending piston 204 either extends of retracts when the imaging unit carrier 118 is moved up or down along the vertical direction V, respectively. Thus, since the extending piston 204 is extended by the force generated by the counterforce generating element 202, the force is applied to the imaging unit carrier 118 in the opposite direction of the weight of the imaging unit carrier 118. Thereby, the weight compensation unit 200 compensates the weight of the imaging unit carrier 118 and of the imaging unit 104, when the imaging unit 104 is mounted to the imaging unit carrier 118.

Figure 3 is a schematic cut view of the microscope stand 102 according to Figures 1 and 2.

In the view of Figure 3, the weight compensation unit 200 has been removed. As can be seen in Figure 3, the microscope column 116 houses a threaded spindle 300 which extends almost the entire length of the microscope column 116 along the vertical direction V. The spindle 300 is rotatably mounted at the base of the microscope column 116 by a spindle bearing 302. A rotational motor 304, for example a stepper motor or a DC motor, is arranged atop the spindle 300 and configured to rotate the spindle 300. The imaging unit carrier 118 engages the thread of the spindle 300 and can thus be moved by rotating the spindle 300. At least the spindle 300 and the rotational motor 304 form a coarse drive 402 (see Figure 4) for approximately positioning the imaging unit carrier 118, and thus the imaging unit 104, along the vertical direction V. The step size of the coarse drive 402, i.e. the minimum movement along the vertical direction V that can be realized by the coarse drive 402, is determined by the step size of the rotational motor 304 and the lead of the spindle's thread. In an alternative embodiment, the coarse drive 402 may also be a rack and pinion drive or a belt drive.

In the embodiment shown in Figure 3 the spindle bearing 302 is arranged atop a piezo motor 306. The piezo motor 306 forms a fine drive 404 (see Figure 4) that allows both the coarse drive 402 and the imaging unit carrier 118 to be moved. The step size of the fine drive 404 is much smaller than the step size of the coarse drive 402. Thus, the fine drive 404 allows the imaging unit carrier 118, and thus the imaging unit 104, to be precisely positioned along the vertical direction V. For example, the step size of the coarse drive 402 may be between 0.1 µm and 10 µm, and the step size of the fine drive 404 may be between 1 nm and 1000 nm.

In an alternative embodiment, the vertical position of the coarse drive 402 is fixed, while the fine drive 404 is moveable by the coarse drive 402 along the vertical direction V. In other words, the coarse drive 402 is configured to move both the fine drive 404 and the imaging unit carrier 118. The spindle bearing 202 is mounted to the base of the microscope column 116, thereby fixing the vertical position of the spindle 200. The piezo motor 206 is arranged between the imaging unit carrier 118 and the spindle 200, and configured to be moved by the coarse drive 402. In such an embodiment, the fine drive 404 moves the imaging unit carrier 118 directly.

The coarse drive 402 and the fine drive 404 form at least part of the drive unit 400 of the microscope stand 102 that makes it possible to position the imaging unit carrier 118 along the vertical direction V. The coarse drive 402 allows to quickly move the imaging unit carrier 118 over a long distance due to its bigger step size. The fine drive 404 allows the imaging unit carrier 118 to be positioned with high precision due to its much smaller step size. Since the weight of both the imaging unit carrier 118 and the imaging unit 104 is compensated for by the weight compensation unit 200, the coarse drive 402 and the fine drive 404 only need to overcome friction - mainly due to the pulley system 210 - in order to move the imaging unit 104 along the vertical direction V. Since the coarse drive 402 and the fine drive 404 do not need to move heavy loads, they can be much more precise, further increasing the precision with which the imaging unit 104 can be positioned along the vertical direction V.

The drive unit 400 is controlled by the controller 106. A method performed by the controller 106 for positioning the imaging unit carrier 118 is described in the following with reference to Figure 4. The microscope column 116 may further comprise a linear encoder 308 for determining the vertical position of the imaging unit carrier 118. In the present embodiment, the linear encoder 308 exemplary comprises a scale arranged parallel to the spindle 300 and a sensor arranged on the imaging unit carrier 118 configured to read the scale. The sensor is further configured to generate a sensor signal corresponding to the readout, and thus to the vertical position of the imaging unit carrier 118, and to transmit the sensor signal to the controller 106. Alternatively, the sensor signal corresponding to the vertical position of the imaging unit carrier 118 may be generated by other means, for example a laser distance measurement.

Figure 4 is a block diagram of the microscope system 100 according to Figure 1.

The controller 106 is configured to control functional units of the microscope system 100. In the present embodiment, the controller 106 is configured to control the imaging unit 104, for example to capture the microscopic image, and the microscope stage 112, for example to position the object 108 within the field of the imaging unit 104. The controller 106 is further configured to control the drive unit 400 comprising the coarse drive 402 and the fine drive 404 based on a user input received via a user input device 406 in order to position the imaging unit carrier 118. In particular, the controller 106 is a closed loop-controller configured to control the drive unit 400 based on the sensor signal received by the controller 106.

In an exemplary method for positioning the imaging unit carrier 118, the controller 106 receives a user input via the user input device 406 corresponding to a set value of the position of the imaging unit carrier 118 along the vertical direction V. The controller 106 then controls the coarse drive 402 to move the imaging unit carrier 118 to a position along the vertical direction V within one step size of the coarse drive 402 from the set value of the position. Thereby, the position of the imaging unit carrier 118 is coarsely adjusted. The controller 106 then controls the fine drive 404 to move the imaging unit carrier 118 to a position along the vertical direction V within one step size of the fine drive 404 from the set value of the position. Since the step size of the fine drive 404 is much smaller than the step size of the coarse drive 402, this precisely positions the imaging unit carrier 118 along the vertical position.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Microscope system
- 102: Microscope stand
- 104: Imaging unit
- 106: Controller
- 108: Object
- 110: Base
- 112: Microscope stage
- 114: Observation position
- 116: Microscope column
- 118: Imaging unit carrier
- 200: Weight compensation unit
- 202: Counterforce generating element
- 204: Piston
- 206: Mounting point
- 208: Pulley
- 210: Pulley system
- 212: Rope
- 214,216: End
- 218: Pulley
- 300: Spindle
- 302: Spindle bearing
- 304: Rotational motor
- 306: Piezo motor
- 308: Linear encoder
- 300: Microscope stand
- 400: Drive unit
- 402: Coarse drive
- 404: Fine drive
- 406: User input device
- O: Optical axis
- V: Vertical direction

## Claims

1. Microscope stand (102), comprising
a base (110) comprising an observation position (114) configured to receive an object (108);
a microscope column (116) extending in a vertical direction (V) from the base (110); and
an imaging unit carrier (118) moveably mounted to the microscope column (116) and configured to mount an imaging unit (104) to the microscope stand (102), the imaging unit (104) being configured to generate a microscopic image of the object (108) received in the observation position (114);
wherein the microscope stand (102) comprises a weight compensation unit (200) configured to counteract the weight of the imaging unit carrier (118) and of the imaging unit (104), when the imaging unit (104) is mounted to the imaging unit carrier (118),
the weight compensation unit (200) comprising a counterforce generating element (202) fixed to a mounting point (206), and a pulley system (210) connecting the counterforce generating element (202) with the imaging unit carrier (118) such that a force generated by the counterforce generating element (202) is applied to the imaging unit carrier (118) in the opposite direction of the weight of the imaging unit carrier (118) and of the imaging unit (104), when the imaging unit (104) is mounted to the imaging unit carrier (118).

2. The microscope stand (102) according to claim 1, wherein the counterforce generating element (202) is a gas pressure spring.

3. The microscope stand (102) according to claim 1 or 2, wherein the pulley system (210) comprises a moveable pulley (208) connected to the counterforce generating element (202) and configured to be moveable along the vertical direction (V).

4. The microscope stand (102) according to claim 3, wherein a rope (212) of the pulley system (210) is guided through the moveable pulley (208), a first end (214) of the rope (212) is fixed to the microscope column (116), and a second end (216) of the rope (212) is fixed to the imaging unit carrier (118).

5. The microscope stand (102) according to any one of the preceding claims, wherein the rope (212) of the pulley system (210) is a band, a metal band, or a steel band.

6. The microscope stand (102) according to any one of the preceding claims, wherein the microscope column (116) comprises the counterforce generating element (202).

7. The microscope stand (102) according to any one of the preceding claims, wherein the weight compensation unit (200) comprises at least one or more idle pulleys (218) arranged at the top of the microscope column (116) for guiding the rope (212) of the pulley system (210) over the top of the microscope column (116).

8. The microscope stand (102) according to any one of the preceding claims, comprising a drive unit (400) configured to move the imaging unit carrier (118).

9. The microscope stand (102) according to claim 8, wherein the drive unit (400) comprises a coarse drive (402) configured to coarsely adjust the vertical position of the imaging unit carrier (118) along the vertical direction (V); and a fine drive (404) mechanically coupled to the coarse drive (402) and arranged in series with the coarse drive (402), the fine drive (404) being configured to finely adjust the vertical position of the imaging unit carrier (118) along the vertical direction (V).

10. The microscope stand (102) according to claim 9, wherein the coarse drive (402) is arranged and configured to be moveable by the fine drive (404), and the fine drive (404) is configured to move the coarse drive (402) and the imaging unit carrier (118) in order to finely adjust the vertical position of the imaging unit carrier (118) along the vertical direction (V).

11. The microscope stand (102) according to claim 9, wherein the fine drive (404) is arranged and configured to be moveable by the coarse drive (402), and the coarse drive (402) is configured to move the fine drive (404) and the imaging unit carrier (118) in order to coarsely adjust the vertical position of the imaging unit carrier (118) along the vertical direction (V).

12. The microscope stand (102) according to any one of the claims 10 to 13, comprising a controller (106) configured to control the coarse drive (402) and the fine drive (404) based on a user input corresponding to a set point value of the vertical position of the imaging unit carrier (118) along the vertical direction (V).

13. The microscope stand (102) according to any one of the preceding claims, wherein the counterforce generating element (202) is configured to generate the force of at least 50 N and at most 180 N.

14. The microscope stand (102) according to any one of the preceding claims, wherein the imaging unit carrier (118) has a travel of at least 5 mm and/or at most 2000 mm.

15. The microscope stand (102) according to any one of the preceding claims, wherein the base (110) comprises a microscope stage (112) configured to be moveable along at least one direction perpendicular to the vertical direction (V); and wherein a top surface of the microscope stage (112) comprises the observation position (114).
